# EUROPEAN PATENT APPLICATION

(11) **EP 3 904 191 A1**
(43) Date of publication of application: **03.11.2021**
(21) Application number: 20172587.6
(22) Date of filing: 01.05.2020
(51) Int. Cl.: B62K 5/027, B62K 5/10

(54) **DEVICE FOR LOCKING TILT MOVEMENT OF A THREE OR MORE WHEELED VEHICLE**

(71) Applicant: Fulpra IP B.V., 7524 PK Enschede (NL)
(72) Inventor: Markvoort, Hendrikus Cornelis, 3583 AB Utrecht (NL); Smit, Martijn Cornelis, 3815 NG Amersfoort (NL); Sanders, Nick, 7548 BL Enschede (NL)
(74) Representative: 't Jong, Bastiaan Jacob

(57) **Abstract**

The invention relates to a device for locking tilt movement of a three or more wheeled vehicle, which device comprises:
- a first frame part;
- a second frame part rotatable arranged relative to the first frame part around a rotation axis;
- a hole arranged in the first frame part at a distance from the rotation axis, wherein the main axis of the hole is parallel to the rotation axis;
- a locking pin arranged in the second frame part parallel and at a distance from the rotation axis, wherein the locking pin is movable parallel to rotation axis between an unlocked position and a locked position, in which the locking pin extends into the hole in the first frame part;
- an actuator for moving the locking pin between the unlocked position and the locked position; and
- spring means arranged between the actuator and the locking pin for taking up the actuator movement, when the locking pin and hole are not aligned;
wherein the end of the locking pin extending into the hole in the locked position is at least tapering when viewed in a direction perpendicular to the rotational direction of the second frame part relative to the first frame part and perpendicular to the rotation axis, and wherein the hole has a corresponding tapered wall part for co-action with the tapering end of the locking pin.

## Description

The invention relates to a device for locking tilt movement of a three or more wheeled vehicle, which device comprises:
- a first frame part;
- a second frame part rotatable arranged relative to the first frame part around a rotation axis;
- a hole arranged in the first frame part at a distance from the rotation axis;
- a locking pin arranged in the second frame part parallel and at a distance from the rotation axis, wherein the locking pin is movable in a direction perpendicular to the rotational direction around the rotation axis between an unlocked position and a locked position, in which the locking pin extends into the hole in the first frame part;
- an actuator for moving the locking pin between the unlocked position and the locked position; and
- spring means arranged between the actuator and the locking pin for taking up the actuator movement, when the locking pin and hole are not aligned.

Such a device is known from WO 2011121211. This publication discloses a three wheeled cargo bike, with a rear frame part on which two wheels are arranged and a front frame part with a single, steerable wheel. To improve the handling of the cargo bike, the front frame part can rotate along a longitudinal rotation axis relative to the rear frame part. As a result, the driver can lean into curves when driving the cargo bike. However, at low speeds the rotation of the front frame part needs to be locked, otherwise the driver will fall over.

In order to lock the rotation of the front frame part relative to the back frame part, WO 2011121211 proposes a locking pin, which is actuated depending on the speed of the cargo bike. This locking pin locks the rotational movement of the front frame part relative to the back frame part and keeps the front frame part in an upright position. The locking pin is spring-loaded, such that the locking pin can be actuated even if the front frame part is not yet in the upright position. As soon as the front frame part reaches the upright position, the locking pin will snap, due to the spring, into the locked position.

When the driver is for example maneuvering the three wheeled cargo bike at low speed, and thus in locked position, any torsional forces between the front frame part and the back frame part will be taken up by the locking pin. If the driver then drives of a curbstone with a back wheel, the locking pin could be damaged due to high torsional forces.

Also, when the driver is stepping into and out of the cargo bike carelessly, the locking pin could already be subjected to undesired high forces.

It is an object of the invention to reduce or even remove the above mentioned disadvantages.

This object is achieved according to the invention with a device according to the preamble, which is characterized in that the end of the locking pin extending into the hole, in the locked position, is at least tapering when viewed in a direction perpendicular to the rotational direction of the second frame part relative to the first frame part and perpendicular to the moving direction of the locking pin, and wherein the hole has a corresponding tapered wall part for co-action with the tapering end of the locking pin.

The device according to the invention is used to lock the tilt movement of three or more wheeled vehicles. To this end a first frame part and a second frame part are arranged rotatable relative to each other along a rotation axis and a locking pin, arranged at a distance from this rotation axis can lock said rotational movement. Any torsional forces on the two frame parts will be converted to a shear force on the pin.

By providing the end of the locking pin with a tapering end when viewed in a direction perpendicular to the rotational direction of the second frame part relative to the first frame part and perpendicular to the moving direction of the locking pin, the shear force will be substantially normal to an inclined surface formed by the tapering end of the locking pin and tapered wall of the hole. When the shear force is large enough, the locking pin will slide away, such that the locking pin is forced against the spring force of the spring means towards the unlocked position. This will limit the forces on the locking pin and when the torsional forces on the first and second frame part will exceed a certain threshold, the device will be forced into an unlocked state, such that the first and second frame part can rotate relative to each other and alleviate the high torsional forces.

The locking pin can move in for example a direction perpendicular to the rotation axis or at a 45° angle, but it is preferred if the main axis of the hole is parallel to the rotation axis, the locking pin is arranged in the second frame part parallel to the rotation axis, and the locking pin is movable parallel to the rotation axis.

Due to the parallel arrangement of the locking pin, there is sufficient space for connecting an actuator to the locking pin and manufacturing of the device is less complicated.

In a preferred embodiment of the device according to the invention, the arc tangent of the taper angle relative to the longitudinal axis of the tapering end of the locking pin is at least larger than the coefficient of static friction between the materials of the locking pin and the tapered wall part.

If the taper angle relative to the longitudinal axis of the tapering end is small, the normal force between the tapering end and tapered wall could be so high, that the resulting friction force prevents the locking pin from sliding along the inclined surface towards the unlocked position. By ensuring, that the arc tangent of the taper angle relative to the longitudinal axis of the tapering end of the locking pin is at least larger than the coefficient of static friction between the materials of the locking pin and the tapered wall part, such a situation cannot occur.

It will be obvious for a person skilled in the art to further increase the arc tangent of the taper angle to compensate for any friction in the movement of the locking pin.

In a further preferred embodiment, the materials of the locking pin and the tapered wall part are both steel and the taper angle relative to the longitudinal axis is at least 26°, preferably between 45° and 65°.

With a larger taper angle, the locking pin can be urged more easily to an unlocked position by the torsional forces between the first and second frame part. The spring means can then be used to fine tune the exact torsional force at which the locking pin will be moved to the unlocked position. This also allows for taking up any variations in static friction between the materials as a result of the amount of lubrication or fouling of the tapered wall part of the hole and the tapering end.

In yet a further preferred embodiment of the device according to the invention the end of the locking pin is truncated cone shaped. Preferably, the wall of the hole is a conical surface.

Having a truncated cone shaped end on the locking pin will remove any requirements of aligning the locking pin with the hole to ensure a proper interaction between the inclined surfaces.

The actuator will be preferably an electromechanical device, which can be controlled by an electrical signal, it may however be preferred that the actuator comprises a mechanically operated handle, which is coupled to the locking pin. This allows for a low cost embodiment of the device. The coupling of the handle to the locking pin could be with for example a Bowden cable or with a rod system.

The invention further relates to a three or more wheeled vehicle comprising:
- a front frame part
- a rear frame part, which is arranged rotatable to the front frame part along a longitudinal rotation axis
- at least one steerable wheel arranged to the front frame part;
- at least one wheel arranged to the rear frame part, which at least one wheel is arranged parallel and on a back axis perpendicular to the longitudinal rotation axis
   **characterized by**
- a device for locking tilt movement according to the invention, wherein the first frame part is arranged to one of the front frame part and the rear frame part, wherein the second frame part is arranged to the other of the front frame part and rear frame part, and wherein the longitudinal rotation axis of the vehicle coincides with the rotation axis of the device.

A preferred embodiment of the vehicle according to the invention, further comprises:
- a speed sensor, in particular coupled to one of the wheels;
- a controller for receiving the speed signal from the speed sensor;
   wherein the controller controls the actuator to move the locking pin to the locked position when the speed signal is below a preset threshold and wherein the controller controls the actuator to move the locking pin to the unlocked position when the speed signal is above the preset threshold.

These and other features of the invention will be elucidated in conjunction with the accompanying drawings.
Figure 1 shows a perspective view of a three wheeled vehicle with an embodiment of a device according to the invention.
Figures 2A and 2B show the embodiment of the device according to the invention, partially in cross-section, and in two different positions.
Figure 3 shows a schematic view of the forces on the locking pin of the device according to the invention.

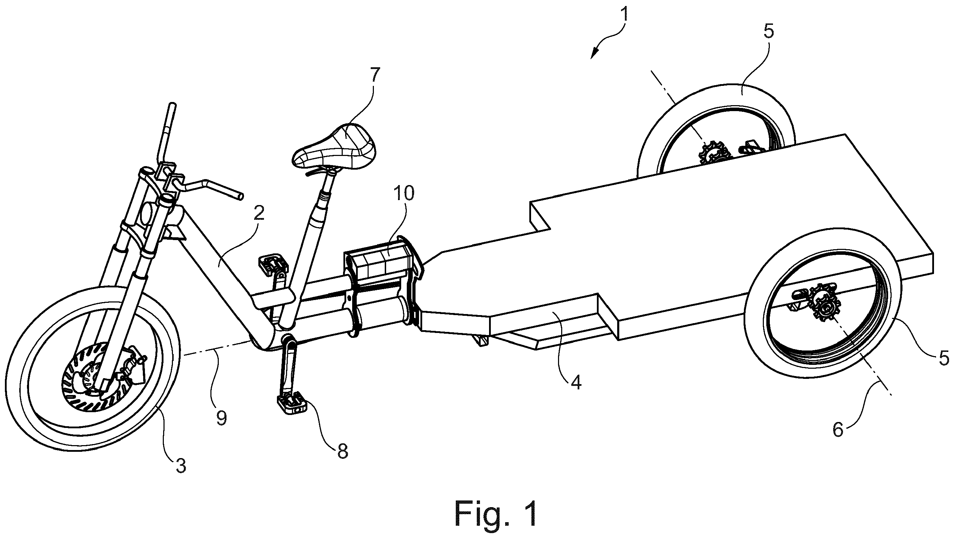

Figure 1 shows a perspective view of a three wheeled cargo bike 1. The cargo bike 1 has a front frame part 2 with a steerable front wheel 3 and a rear frame part 4 with two rear wheels 5 arranged on a back axis 6. The front frame part 2 is provided with a seat 7 for a driver and pedals 8 for propelling the cargo bike 1.

The front frame part 2 is arranged to the rear frame part 4 and rotatable along the longitudinal rotation axis 9. In order to lock said rotation a device 10 for locking the tilt movement is arranged on the front frame part 2 and rear frame part 4.

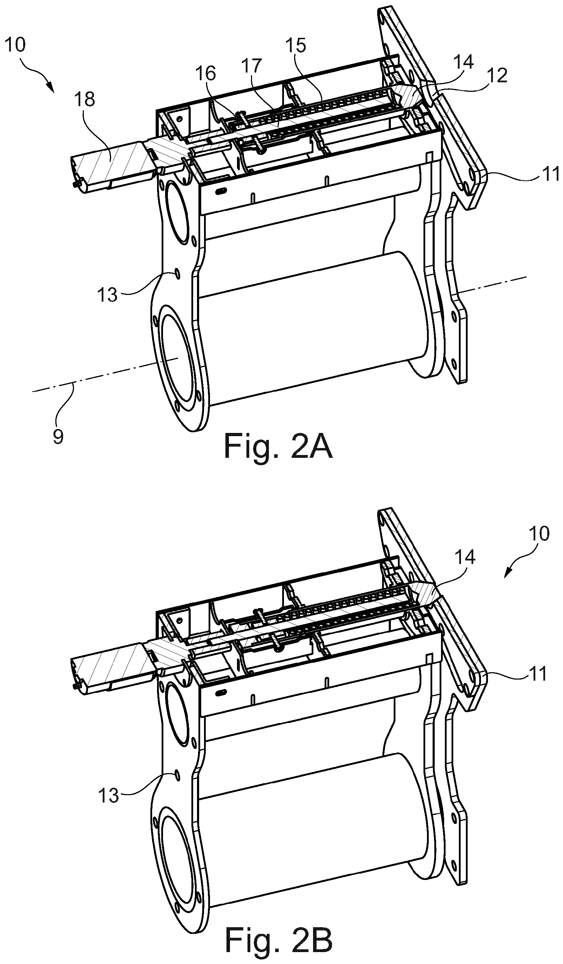

Figure 2A shows the device 10 in an unlocked state. The device 10 has a first frame part 11 with a hole 12 having a conical surface. The first frame part 11 is fixedly mounted to the rear frame part 4 of the cargo bike 1.

The device 10 furthermore has a second frame part 13, which is fixedly mounted to the front frame part 2 of the cargo bike 1. As a result, the first frame part 11 and the second frame part 13 can rotate relative to each other along the longitudinal rotation axis 9 of the cargo bike 1.

The second frame part 13 is provided with a locking pin 14, which is movable parallel to the longitudinal rotation axis 9 between an unlocked position, as shown in figure 2A, and a locked position, as shown in figure 2B.

A coil spring 15 is provided inside of the locking pin 14. This coil spring 15 can be tensioned by moving an abutment 16, which is arranged on a threaded rod 17, which can be rotated by an actuator 18.

When the actuator 18 is actuated, the locking pin 14, having an end with a truncated cone shape is urged into the hole 14 (see figure 2B, such that the first frame part 11 and second frame part 13 are locked and rotation is no longer possible. If the hole 12 and locking pin 14 are not aligned, the spring 15 will urge the locking pin 14 against the first frame part 11 and as soon as hole 12 and locking pin 14 are aligned, the locking pin 14 will snap into the hole 12.

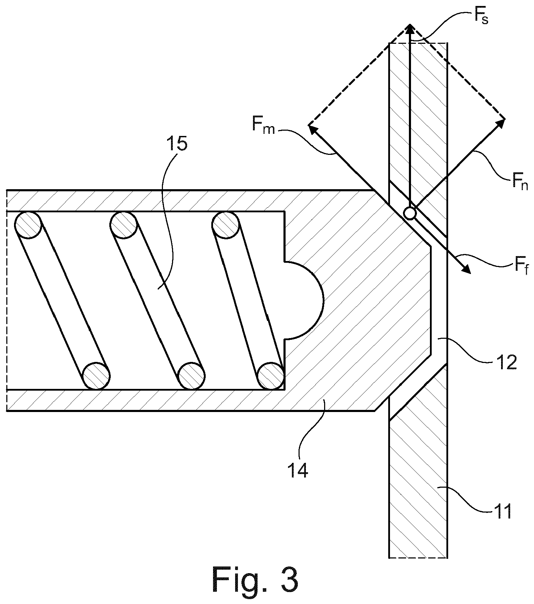

Figure 3 shows a schematic view of the forces on the locking pin 14 of the device 10 when torsional forces are applied on the first frame part 11 and the second frame part 13. A shear force Fₛ will result from the torsional forces. This shear force Fₛ can be dissected into a force Fₙ normal to the conical surface of the hole 12 and a force Fₘ, which urges the locking pin 14 to move to the unlocked position.

The normal force Fₙ will cause a static friction force F_{f}, which depends on the friction coefficient of the materials of the locking pin 14 and the hole 12. The friction force F_{f} must be overcome by the force Fₘ before the locking pin 14 will be moved to the unlocked position, when torsion is applied on the first frame part 11 and second frame part 13.

## Claims

1. Device for locking tilt movement of a three or more wheeled vehicle, which device comprises:
- a first frame part;
- a second frame part rotatable arranged relative to the first frame part around a rotation axis;
- a hole arranged in the first frame part at a distance from the rotation axis;
- a locking pin arranged in the second frame part at a distance from the rotation axis, wherein the locking pin is movable in a direction perpendicular to the rotational direction around the rotation axis between an unlocked position and a locked position, in which the locking pin extends into the hole in the first frame part;
- an actuator for moving the locking pin between the unlocked position and the locked position; and
- spring means arranged between the actuator and the locking pin for taking up the actuator movement, when the locking pin and hole are not aligned;
**characterized in that**
the end of the locking pin extending into the hole, in the locked position, is at least tapering when viewed in a direction perpendicular to the rotational direction of the second frame part relative to the first frame part and perpendicular to the moving direction of the locking pin, and wherein the hole has a corresponding tapered wall part for co-action with the tapering end of the locking pin.

2. Device according to claim 1, wherein the main axis of the hole is parallel to the rotation axis, wherein the locking pin is arranged in the second frame part parallel to the rotation axis, and wherein the locking pin is movable parallel to the rotation axis.

3. Device according to claim 1 or 2, wherein the arc tangent of the taper angle relative to the longitudinal axis of the tapering end of the locking pin is at least larger than the coefficient of static friction between the materials of the locking pin and the tapered wall part.

4. Device according to claim 3, wherein the materials of the locking pin and the tapered wall part are both steel and wherein the taper angle relative to the longitudinal axis is at least 26°, preferably between 45° and 65°.

5. Device according to any of the preceding claims, wherein the end of the locking pin is truncated cone shaped.

6. Device according to claim 5, wherein the wall of the hole is a conical surface.

7. Device according to any of the preceding claims, wherein the actuator comprises a mechanically operated handle, which is coupled to the locking pin.

8. Three or more wheeled vehicle comprising:
- a front frame part
- a rear frame part, which is arranged rotatable to the front frame part along a longitudinal rotation axis
- at least one steerable wheel arranged to the front frame part;
- at least one wheel arranged to the rear frame part, which at least one wheel is arranged parallel and on a back axis perpendicular to the longitudinal rotation axis
**characterized by**
- a device for locking tilt movement according to any of the preceding claims, wherein the first frame part is arranged to one of the front frame part and the rear frame part, wherein the second frame part is arranged to the other of the front frame part and rear frame part, and wherein the longitudinal rotation axis of the vehicle coincides with the rotation axis of the device.

9. Vehicle according to claim 7, further comprising:
- a speed sensor, in particular coupled to one of the wheels;
- a controller for receiving the speed signal from the speed sensor;
wherein the controller controls the actuator to move the locking pin to the locked position when the speed signal is below a preset threshold and wherein the controller controls the actuator to move the locking pin to the unlocked position when the speed signal is above the preset threshold.
